# EUROPEAN PATENT APPLICATION

(11) **EP 4 134 880 A1**
(43) Date of publication of application: **15.02.2023**
(21) Application number: 21212963.9
(22) Date of filing: 07.12.2021
(51) Int. Cl.: G06N 5/02, G06N 3/04, G06N 3/08

(54) **A COMPUTER-BASED SYSTEM USING NEURON-LIKE REPRESENTATION GRAPHS TO CREATE KNOWLEDGE MODELS FOR COMPUTING SEMANTICS AND ABSTRACTS IN AN INTERACTIVE AND AUTOMATIC MODE**

(30) Priority: 10.08.2021 US 202117398920
(71) Applicant: KATALYXER S.r.l., 37010 Cavaion Veronese (VR) (IT)
(72) Inventor: BENONI, Andrea, 37010 Cavaion Veronese (Verona) (IT)
(74) Representative: Anselmi, Davide

(57) **Abstract**

A computer-implemented neural network graph (1) system, comprising a plurality of neurons (2), each represented by a unique addressable node in a dynamic data structure and each containing a plurality of data, and a plurality of axons and dendrites (4) connecting two or more neurons (2) between them in order to represent a relation and transport one or more data contained in a neuron (2) to another neuron. Each axon (4) having at its end a synapse (3) for connecting it to a neuron (2) and at least one intermediate neuron (2) is connected through an intermediate axon (4) or dendrite and its synapse (3) directly to another axon (4) which connects two main neurons (2). The intermediate neuron (2) and intermediate axon (4) being configured for:
- selecting one or more specific data contained in the main neurons (2) and transmitted between them along their axon (4) or dendrites (4) in function of a preselected data of the intermediate neuron (2) in such a way to define a first combination of data;
- selecting one or more specific data, different from the first selection, contained in the main neurons (2) and transmitted between them along the axon (4) in function of a preselected data of the intermediate neuron (2) in such a way to define a second combination of data different from the first;
- creating a graphical representation comprising a graph (1) of said data in which a first abstraction level is defined by said first selection and a second abstraction level is defined by said second selection different from the first.

## Description

### FIELD OF THE INVENTION

The present invention relates to the field of the representation of knowledge by using graphs to create models able to compute semantics and abstracts in an interactive and automatic mode.

In detail, the graphs are generated by using a computer-implemented system based on a neural network representation capable of creating different levels of abstractions in a dynamic structure in such a way to manage more efficiently information or knowledge in general.

Further, the present invention is relative to the field of organization of information and managing semantic meaning in a dynamic model which can be represented in a graphic way.

In particular, semantic models are used to represent knowledge to search, manipulate information. Abstractions are a system to define ontology to generalize and focus on meanings to manipulate information. Neuron-like representation as implemented and described permits to achieve both, creating an interactive and automatic semantic modelling through abstractions and active components.

In other words, for the present invention, it has to be noted that the term "Abstraction" represents the capability to move knowledge from facts and events to the semantic (the quality to deal with ideas rather than events).

### BACKGROUND

Existing entity relationship graphs are typically based on a standard flat semantic representation. To overcome this limit a neural networks representation has been developed that associate a number of neurons representing information, source of data or abstraction between each other via axons (defining outputs link), dendrites 4 (defining inputs link) and synapses 3 (defining the connections).

Thus, nearly all existing neural networks are based on the concept of three elements: neuron A, an axons, dendrites 4, synapsis, and neuron B.

Such neural networks typically require a high number of neurons and axons depending on the number of desired relations desired and on the number of information to be manged.

Existing entity relationship graphs are not capable of expressing abstractions or recollecting an input state based on the stimulus of any output of any element (dynamic model).

So, existing entity relationship graphs provide outputs that are based entirely on the static initial design. The order in which input states are applied has no bearing on the network's ability to recognise them.

Also, with reference to the current graphs representations, known entity relationship graphs are specialized for single domains: workflows, GANTT, mind map, hierarchic, taxonomy, entity relationship, organisation, cognitive maps.

There are also many other limits in common to the various known flat systems here below listed:
- Revisions, in current approach of various graphs systems there is a problem of archiving different version and or representing the variations using different colours;
- Multi model (multiuser/view/use): traditional graph system is monolithic, to create variations is required to create separate files that start to have a separate develop history.
- Current modelling graphs system is fragmented inside and misses consolidation of information.

Some examples of prior art are known from:
- US8190422 which discloses a semantic cognitive map created by associating each of a multitude of dictionary entries with a point among a multitude of points in a metric space. Each of the dictionary entries associated with at least one onium, the at least one only including at least one synonym or antonym, the metric space having a topology and metrics, the location of each of the multitude of points defined by a global minimum of an energy function of the multitude of points;
- CN106205248A which discloses an on-line study cognitive map of domain-specific knowledge learning and mastering state, and system includes intelligent terminal for on-line study, online learning cognition map generation system in server, ...;
- US8046322 which discloses a method of mining data to discover activity patterns within the data is described. The method includes receiving data to be mined from at least one data source, determining which of a number of specified interests and constraints are associated with the mining process, selecting corresponding mining agents that combine search algorithms with propagators from the specified constraints, and finding any activity patterns that meet the specified interests and constraints.

### BRIEF DESCRIPTION OF THE DRAWINGS

The present invention is illustrated by way of example and not limited in the accompanying figures in which like reference number are indicated.
Figures 1a and 1b show two example of prior art system for relational models;
Figures 1c and 1d show two examples of the generic principle of the graph system according to the present invention compared with the prior art respectively represented in figures 1a and 1b;
Figure 2 shows a first example of the system according to the present invention applied to a "file system";
Figure 3 shows a second example of the system according to the present invention applied to a "e-mail system";
Figure 4 shows a third example of the system according to the present invention applied to a "3d-Browser";
Figure 5 shows a fourth example of the system according to the present invention applied to a "Database sub-set replication system";
Figure 6 shows a fifth example of the system according to the present invention applied to a "Abstracts and metastable model";
Figure 7 shows a sixth example of the system according to the present invention applied to a "loT Exact bigdata system";
Figure 8 shows a seventh example of the system according to the present invention applied to a "hypertext system";
Figure 9 shows an eighth example of the system according to the present invention applied to a "Benchmark and evaluation system";

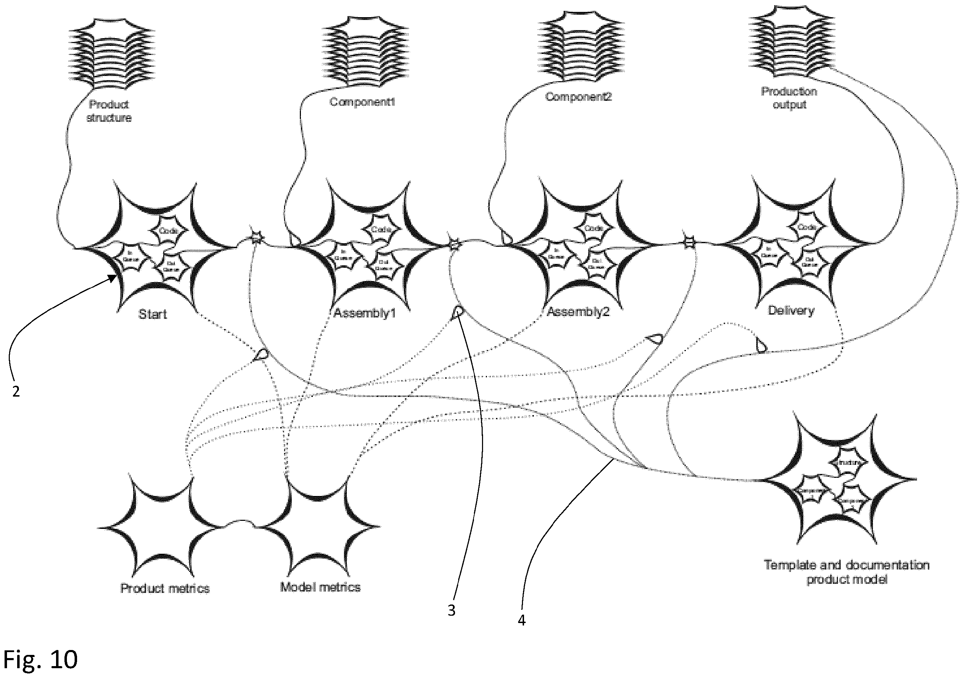

Figure 10 shows a nineth example of the system according to the present invention applied to a "Simulation and semantic model"; and

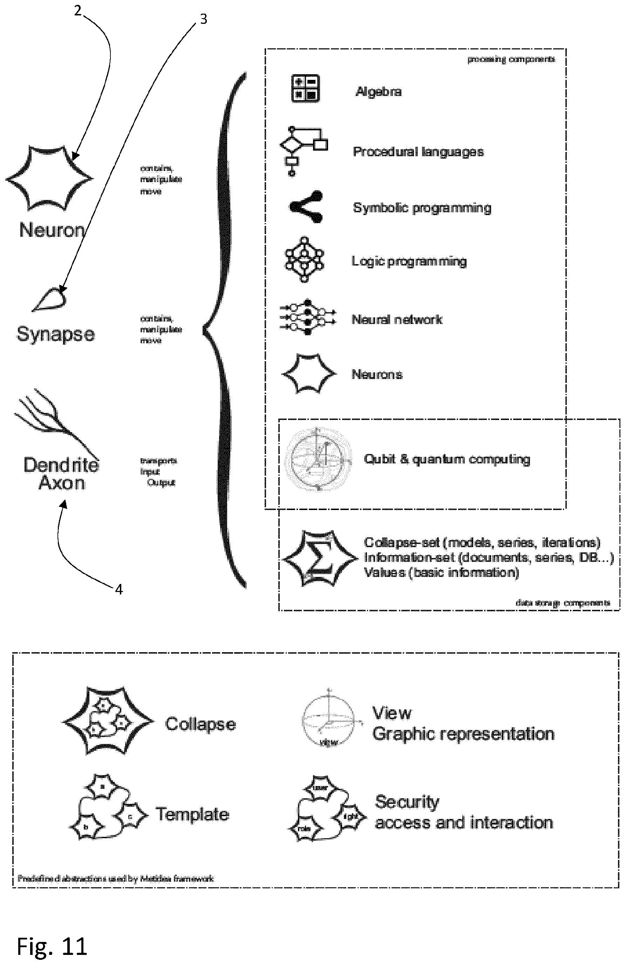

Figure 11 shows a legenda of the elements represented in the previous figures according to the present invention.

### DETAILED DESCRIPTION

The object of the present invention is a computer-implemented neural network graph 1 system, comprising a plurality of neurons 2, each represented by a unique addressable node in a dynamic data structure and each containing a plurality of data.

First of all, here below are defined the elements used in the following description.

**Neurons 2** are the core elements, capable to connect to multiple elements through Dendrites 4 (defining inputs link), Axons(defining outputs link) and Synapses 3 (defining the connectors). Internally they can accommodate both processing and information components interconnected and linked to the other Neurons 2 through Synapses 3 or to other Neurons 2 through Dendrites 4, Axon 4 and Synapses 3.

Neurons 2 can contain other neurons 2 as models (Collapse, sets) or as piece of information it can manipulate or move.

Neurons 2 can be transported as pieces of information through Neurons 2/Dendrites 4/Axons/Synapses 3.

Then the system comprises a plurality of dendrites 4 and axons connecting two or more neurons 2 between them in order to represent a relation and transport one or more data contained in a neuron 2 to another neuron; each dendrite/axon 4 having at its end a synapse 3 for connecting it to a neuron. They interconnect the Neurons 2 using Synapses 3 terminals, in output (Axon) and input (Dendrite) mode.

The communication channel between them is directional and can transport any element/module of the present invention, in this mode is feasible complex modelling where information itself is a present invention model or element. Moving complex models or links to models, abstracts and templates offer the ability to manage complex simulations, workflow, dynamic and self-modifying models....

**Axon 4 and Dendrites 4** move information, replicating on the different branches in case of ramification. They have the same elaboration capabilities of other elements thanks of logic modules and interactions with synapses 3. Synapses 3 connect Axon/Dendrites 4 to a Neuron, another Synapse 3 or to an Axon.

**Synapses 3** supports the same elaborations components of the Neuron 2 with more limits in communication reduced to being a connector terminal interconnected directly between two elements.

In most of the simple designs Synapses 3 uses just Algebra to define basic interaction like assignment, Boolean or mathematical operations. In complex modelling can use a mix of engine and local storage, like neural-network with their statistics models or quantum-engine if the information is a Qubit.

It has to be noted that a **template** is a set of elements, a sub model with Neurons 2, Dendrites 4, Axon 4 and Synapses 3, used to create new models or to assemble complex ones. The set of elements can be a copy of real model generalized, meaning models empty, ready to receive new information, names and other identifying characteristics. It is also a system to share finite sub-models between users to achieve specific scopes.

Templates are also the way for generalization of abstractions.

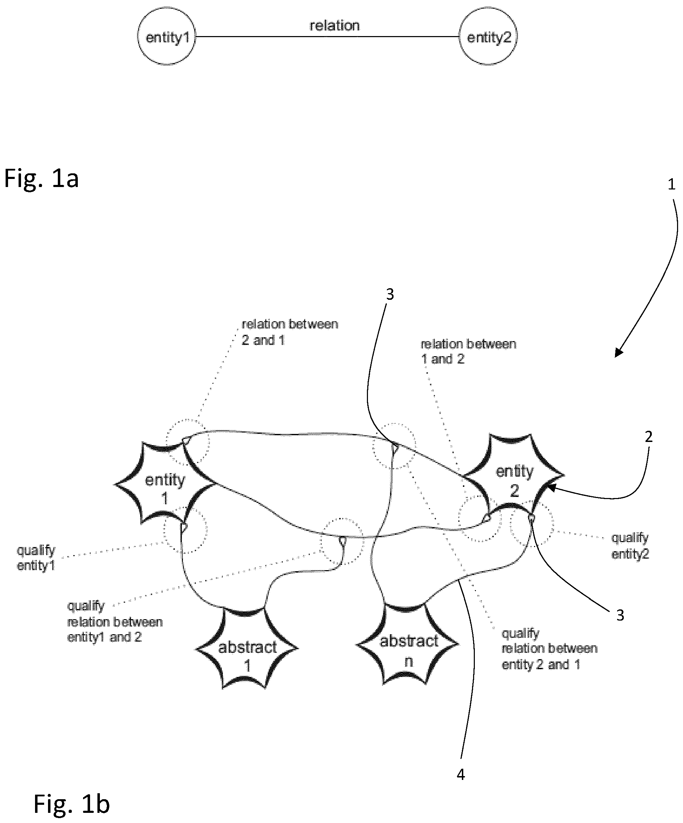

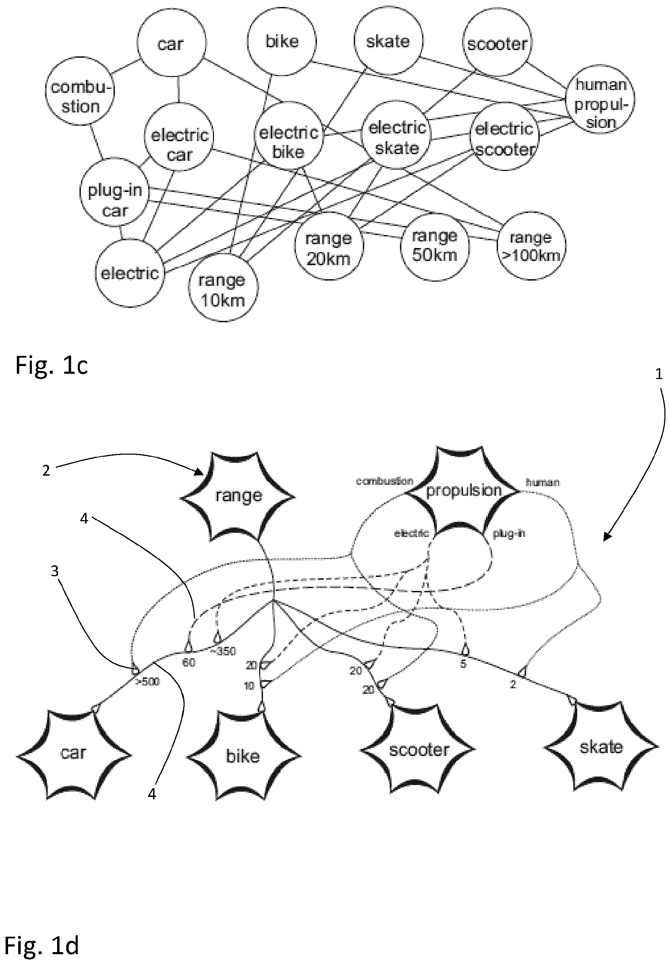

According to the present invention (figure 1c, 1d), at least one intermediate neuron 2 is connected through an intermediate axon 4 and its synapse 3 directly to another axon 4 or dendrites 4 which connects two main neurons 2 in a bidirectional way; the intermediate neuron 2 and intermediate axon 4 being configured for:
- selecting one or more specific data contained in the main neurons 2 and transmitted between them along their axon 4 in function of a preselected data of the intermediate neuron 2 in such a way to define a first combination of data;
- selecting one or more specific data, different from the first selection, contained in the main neurons 2 and transmitted between them along the axon 4 in function of a preselected data of the intermediate neuron 2 in such a way to define a second combination of data different from the first;
- creating a graph 1ical representation comprising a graph 1 of said data in which a first abstraction level is defined by said first selection and a second abstraction level is defined by said second selection different from the first.

Preferably, each data contained in a neuron 2 belong to a semantic field. The intermediate neuron 2 and intermediate axon 4 or dendrite being configured for selecting one or more specific data contained in the main neurons 2 which belongs to the same semantic field of the preselected data of the intermediate neuron.

As it is shown in figures 1c, 1d, more than one intermediate axon 4 and intermediate neurons 2 are connected directly to the same axon. In detail, each intermediate axons and intermediate neurons 2 are configured to select respective different data contained in the main neurons 2 and transmitted between them along the axon.

According to an aspect of the present invention, each neuron 2 is configurable in a collapsed condition in which it comprises a sub-system of a dynamic data structure comprising a neural network.

In detail, *"collapse"* is the present invention sub-model managed as a single Neuron, the input-output (connection, Axon) connect to the internal model, but complexity is hidden.

In the definition of the internal model is defined by what is visible externally thought the graph 1. A collapse-set contain series or iterations of elements. The scope is to hide complexity and simplify management.

According to an aspect of the present invention, the system implements an element **orthogonal model** permitting to implement full featured model thanks to capability of the components. Both a Neuron 2 or Synapse 3 can be a collapse of a model and include multiple elaboration elements.

A Neuron 2 can contain a single piece of information or a series or iteration of any elements including models (collapse-set).

This allows to move from specific model to abstractions and elaboration models just evolving the initial schema.

The present invention browses using an advanced User Interface facilitate these transformations, from defining models, generalizing sub-models in templates and then in abstractions.

To support this modelling, the present invention implements an orthogonal information system that unify the representation and the interactions.

### Single information

A single piece of information (Neuron 2 representing it): a sequence of characters in a text, a value, a parameter, one input value...

The Neuron 2 representation is an alias of the information, to permit the evolutions in the modelling of the single piece of data. In this mode in tagging parts of a text, like in hyper-texts approach, is possible to refer to data but at the same time abstract the reference to use in different ways.

### Collapse-set (Neuron 2 accepting in input the filter and returning the set)

A selection of data according to some filter, fixed or dynamically received from a source.

### Set

A set of data, from 0 to n elements, also heterogeneous, contained inside a neuron.

### Probes

The invention implements an interface with the external world as single or interconnected neuron 2 representing a probe, connected to input, external app, SQL and relational DB, non SQL DB...

Another example is a hyper-text pointing to a document or web page, probes permit to transform single pieces of the document in elements of information inside the cognitive model.

In The present invention an information can be any base type like text, number, data set, XML... and complex like components, elements, models. In this mode the modelling can manage complex interaction like the one supported by the OOP paradigm but also Inferential models as self-modifying and reorganizing models.

According to other aspect of the present invention, the specific data treated by the computer-implemented neural network.

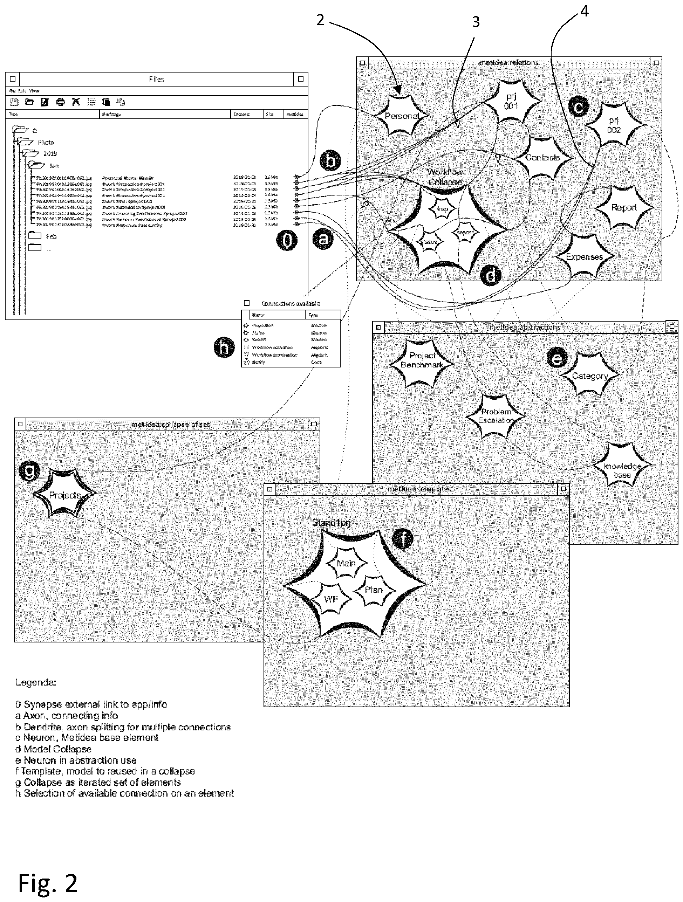

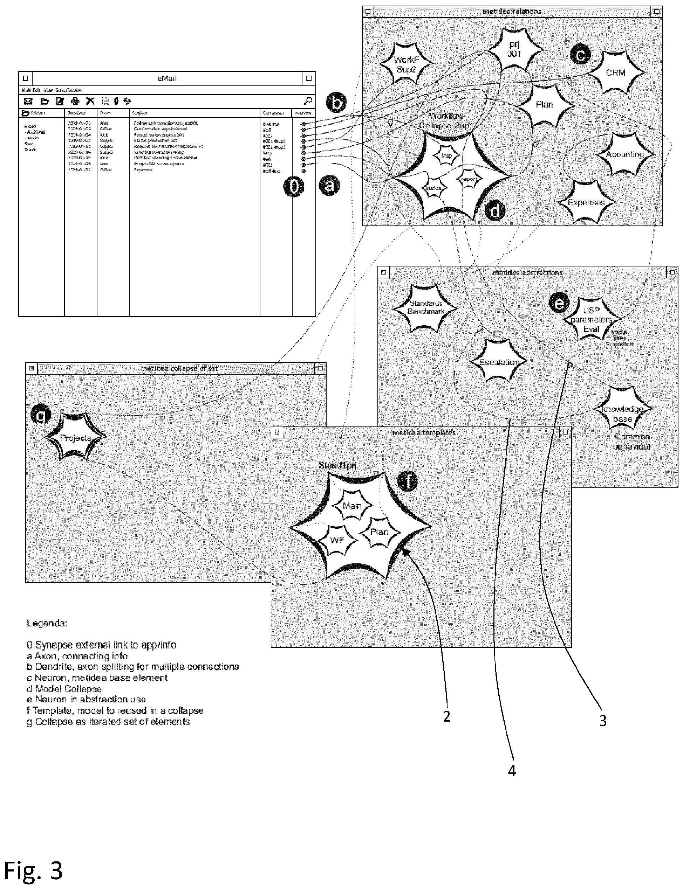

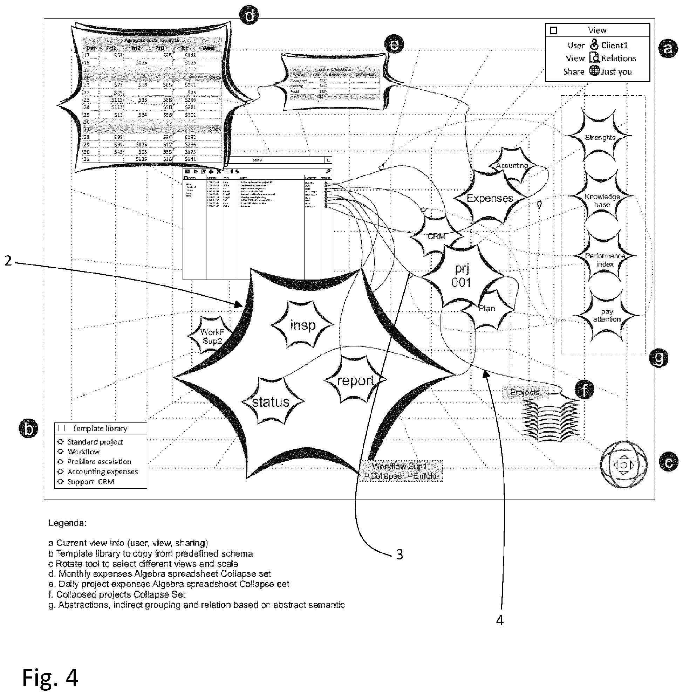

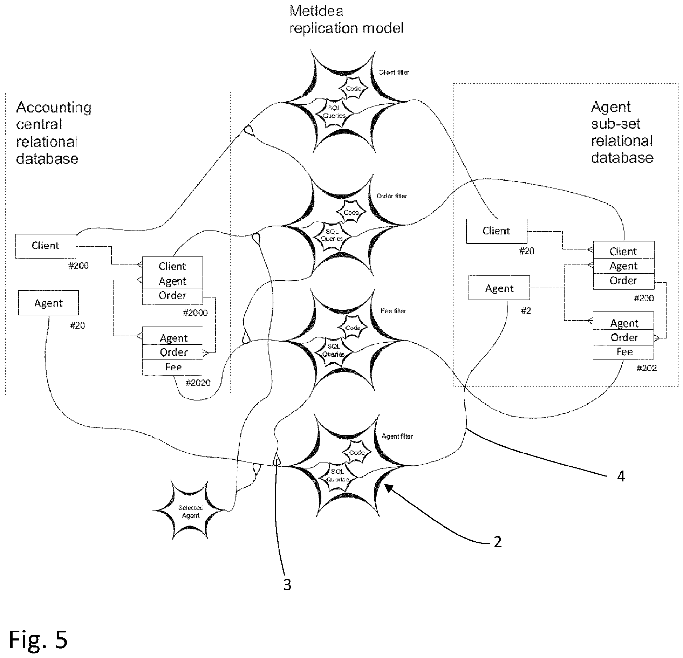

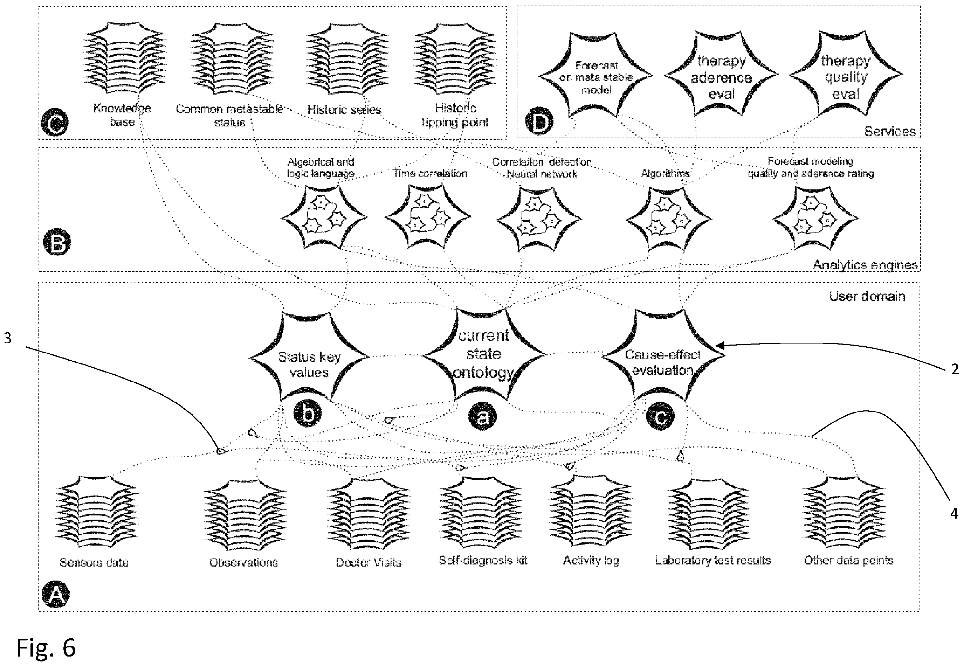

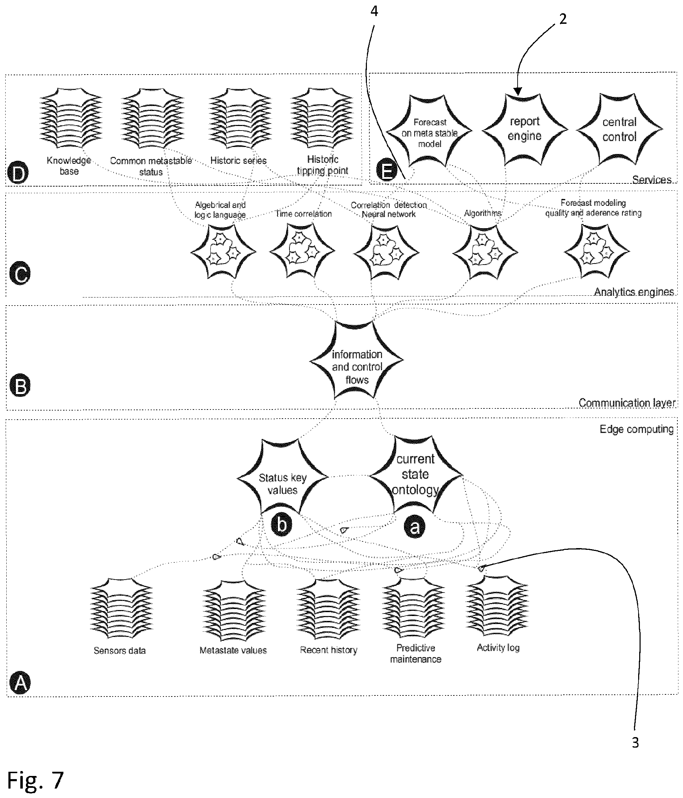

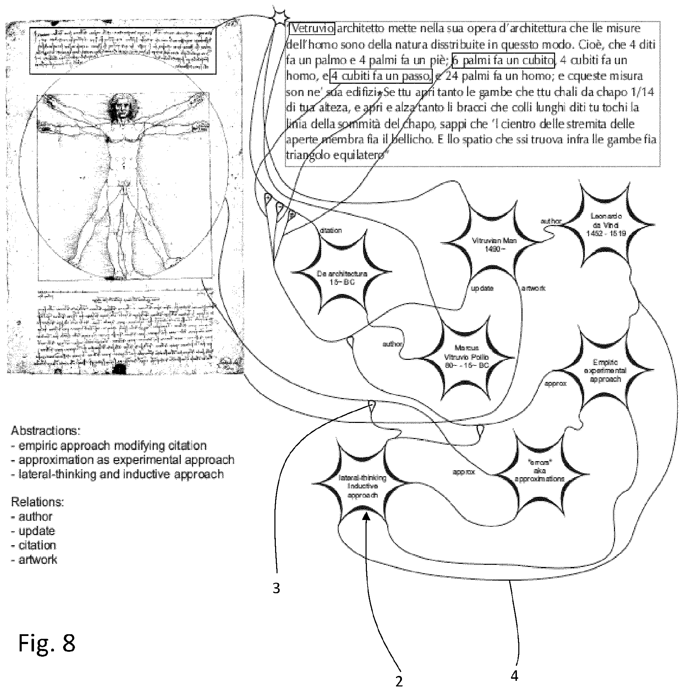

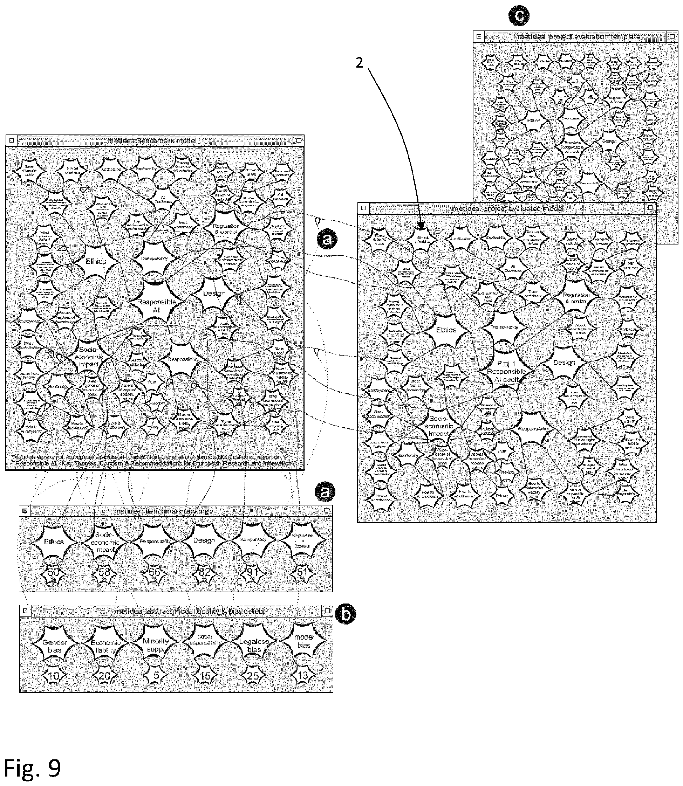

A dynamic data structure selected from a:
- File system (figure 2); or
- E-mail system (figure 3); or
- Browser system (figure 4); or
- Data Base sub-set replication system (figure 5); or
- Metastable models, preferably a Diabetes system (figure 6); or
- loT exact Big Data (figure 6); or
- Hypertext (figure 7); or
- Benchmark and evaluation system (figure 8); or
- Simulations and semantic models (figure 9).

### File system

Advantages respect traditional file systems using taxonomy (folders) is in:
- The capability to put relations between files permitting more accessible and meaningful grouping respect the one flat allowed by folders;
- Set theory at the base of Tags fall short in a complex environment with multiple targets and re-use of elements, instead the present invention allows to scale quickly, managing difficult requirements, templates, relations, workflows, and many other uses through abstractions;
- Templates permits to apply standard (user-defined common patterns) abstraction to files;
- Abstractions permits to build up more complex semantic infrastructure respect just flat relations models;
- Collapse sets permit to group and access as series, complex or straightforward abstractions;
- The File element is managed as a Collapse permitting to connect subelements to the semantic model as explained in the Application Hypertext;
- The present invention represents the bridge between different systems, like files and email or accountings and the semantic models. On this connection, it is facilitated by the inner capability to put in relations different application semantics and interfaces.

Plugin is how the present invention interacts with file systems permitting to link the traditional user interface of folder/file system with a semantic model. The coexistence of the traditional file system and the present invention model is guaranteed by Unique file Id references and the plugin.

In the example, a model built on a database of maintenance service photos archived per date.

Files are connected to directly to projects, workflows, expenses, contacts... and abstractions as benchmarks, category, problem types and knowledge base.

### E-mail system

Email plugin permits extending the mail system beyond the usual organization in the sender, date, folder, or search using tags and text search.

Using the present invention is possible to organize data in ontology structures with relations and parallel and abstractions to address different needs.

The modeling capability to manage different level abstractions permits maximum flexibility in organizing the emails and contains information. The example displays direct relations like in workflows or CRM and abstract evaluation based on Unique Sales Propositions or standard benchmarks. Dynamic features of the present invention permit to elaborate dynamically the information using the various automation engines. This is the case of benchmarks but offering also the what-if simulation of variations or different evolutions.

### Browser system

3d Browser permits organizing and modeling elements in a 3d space to create different views and perspectives.

Using Collapses to focus on the main structure, hiding details complexity. Collapse-Set permits to see enumerated elements and access just the relevant one related to the current use.

The use of 3d representation of models permits creating multiple perspectives on the same one using a spatial distribution of elements according to a different order, hierarchic, relations, semantic...

The browser uses the view rotation to permit to see from the different perspectives without switching view.

A view in the present invention is just an abstract, and representation of data is unlimited as personal views, per user, or shared vision of the model.

The security itself is an abstraction permitting to share complex models, fine-tuning access capability per user, role, or other rules.

The 3d Browser uses mainly two abstract to represent data: model spatial representation x,y,x...n and security abstraction rules.

The example represents direct relations between mails and direct relations with workflows, spreadsheets, projects, and expenses.

And relations with abstractions covering more the ontology and meanings aspects for analysis.

### Data Base sub-set replication system

Database subset replication through the present invention often requires an autonomous domain to do peripheral elaborations, and databases are fundaments.

Being able to replicate a subset of the central relational database can be advantageous from different points of view in order to maintain the limit of local resources and potential security issues is fundamental to reducing the amount of data to the minimum.

### Example

This example shows a typical relational model and a typical challenge for traditional approaches.

The hypothetical organization is constituted by 20 agents, with equally distributed 200 clients connected to an archive of 2000 orders and 2020 fees.

The 20 exceeding fees are the 1% of the order with multi-agent involvement. To correctly represent the complete fees, report on-premises, the additional agents' record is required to copy (this is why the resulting ones are 2).

### Solution

The present invention solves the problem of filtering a sub-set creating a parallel model structure, an abstraction, permitting to describe direct relations:
- from Selected agent to agent table,
- from selected agent to orders,
- from orders to clients,
- from orders to fees,
   and indirect relations,
- from order selected to additional agents involved.

The capability of the present invention to describe and manage complex abstractions permit to create parallel semantic to fully support the business logic of remote applications and requirement about data sub-set.

For improved functionality, the application can replicate data based on a date range to optimize data flow between not interconnected systems, just the delta of new records or updates (for example using time-stamps to log creation, update, cancellation).

### Metastable models, preferably a Diabetes patient support system

Abstracts are an efficient way to categorize and detect complex metastable states and overall models.

Metastable mathematics can model the complexity of metabolism and related diseases. This example applied to diabetes, evaluating therapy adherence, result quality, and forecast evolution for prevention.

Four main sections constitute the model:
A- Manual and automatic correlation of data in the current status evidencing key-value, behaviors, and cause-effect between factors,
B- Automatic correlation, forecast, and ratings,
C- Databases with the typical metastable status, knowledge base, historical series, and tipping points,
D- Model result with forecast, adherence, and therapy quality ratings.

The present invention supports complex modeling combining manual correlations and dynamic modeling with multiple dimensions, including time. The user's automatic features and interaction capability achieve the level of functionalities required to support complex metabolic models.

Abstractions permit creating holistic models that include physical and semantic dimensions like human factors and not predefined domains. Physical models and holistic models can cohabit in different dimensions contributing to supporting the patient.

The present invention capability to support automation and multiple elaboration engines, in this case, a mix of Bayesian, algebraical and neural models, is ideal for supporting meta-stable models. The system permits the same time to describe meta-stable modeling, evaluate current status, and predict the current situation and dynamic for the prediction.

### IoT exact Big Data

The present invention applied to bigdata contributes to solving different challenges in loT:
- limits of current bigdata approaches on discretizing data maintaining the correlations,
- quantity of information, sustainability, and scalability of solutions,
- analytics difficulties in finding the semantics of information,

At the local level, (A) uses edge computing to simplify information, creating metastable data modeling.

The capability of the present invention to correlate data using abstractions and different logic engines, and inner automation, simplifies this task.

The communication layer (B) communicates the subset of simplified information, the metastable values defining the current status and model. Also, control commands and updates of the model follow the same rules permitting at the same time to limit data traffic and augmenting the model interaction intelligence.

Raising the level of the communications from raw data to a more sophisticated mix of values and link with abstraction permits to augment the security and the overall intelligence of the system.

The analytics engines in the cloud (C) using the meta-data generated by the present invention edge computing takes advantage of the inner semantic for modelling data.

Using the databases of (D) supports the cloud Services (E) on supervising, analytics, reporting, and controlling the loT infrastructure.

The present invention qualifies the solution creating a sort of specular system Edge/Cloud empowering both sides:
- Creating an intelligent system in Edge thanks to abstraction,
- Simplifying information to efficient and securitizing communication,
- Creating an intelligent Cloud modeling of information to empower analytics and capability of control,
- Interactive and automation capabilities renders the full infrastructure dynamic and adaptable to different needs.

### Hypertext

This example of sub-part of a wiki demonstrates the advantages of the present invention on putting in relation concrete information and abstractions.

The present invention interface permitting an image correlation with the digitalized text as a complex element (neuron) capable of being used as advanced hypertext.

As direct relation is the connections between Leonardo da Vinci and Vitruvius works as citation and deriving the base mathematics. There are already two
abstractions evidencing modification and a missing element operated by Leonardo from the original text in the hypertext link.

In the abstraction domain are the evaluations of "errors" resulting from approximations and experimenting and the relation between those aspects and some details of the artworks.

An additional semantic level is an abstraction related to lateral-thinking and inductive approach putting in relation all these aspects.

### Benchmark and evaluation system

In this example, we demonstrate the present invention capabilities as a benchmarking tool:
- capability to support direct benchmark complex rating based on models and abstracts,
- the capability to match a model with another reference using complex relation (a).

Every connection between the two models can interact with other elements, permitting increased or decreasing ranking using complex relations.
- the model permits an additional level of evaluation, more abstract, about the quality of the project according to overall parameters based on patterns also based on relations (b),
- the model compared can be generated from a template (c) in a type of list to make more accessible the development of the comparison and filling of elements,
- capability of the present invention to manage abstraction permit to add analysis elements to the benchmark:
   1. extended evaluation of existing one, like the presence of specific factor combined permitting to match a benchmark element,
   2. missing elements in the evaluating model (also as pattern), this is useful to evidence and organize the delta and actions to fulfill the benchmark,
- the capability to map positive and negative benchmark factors using the standard design and just a different evaluation of the match in the element logic through active elements in the Synapses 3 or the Neuron 2 connections entry points.

### Simulations and semantic models

The initial concept of the present invention started from recreating in digital the reality like the language for digital twins' simulations.

Simulations from which derived Smalltalk and then the OOP Object Oriented Programming paradigm.

The idea is to recreate in digital all components and behavior of real-world objects to study and forecast physical models, from machines to production chains and social environment.

The present invention is an ideal tool for such multidimensional Simulations. The «neurons 2» communicate with each other by moving also complex objects like neurons 2/collections/collapse can simulate most models representing natural structure, communications, relations, arriving to the semantic level.

What makes the difference in respect to other approaches is the capability to create additional dimensions using the abstractions.

The single objects can have identities far more sophisticated than just status machines permitting sophisticated interactions or analytics.

The full system can be represented with an additional analytic layer covering different aspects than just the current simulation status or counters.

For example, potential additional dimensions can be:
- documentation, each object in movement, connection, rule, active component can be documented as behavior also from a semantic point of view,
- mixing documentation and logic definition of the model,
- the documentation can be a model used for a benchmark for adherence or to detect BIAS.

Model documentation, benchmark, and Bias detect is one of the ways proposed for projects to be under control from legislation and ethical policy point of view "what-if" approaches to do a forecast of different target or potential futures for the model as:
- improvement
- adverse conditions...

It is also object of the present invention a method for implementing a neural network graph 1 through a computer. In particular, the method is performed by actuating the phases above described in relation to the system and here recalled.

In particular the method is performed by a computer, comprising the following steps:
realizing in a graph 1ic representation of a model a plurality of neurons 2, each represented by a unique addressable node in a dynamic data structure and each containing a plurality of data;
realizing a plurality of axons and dendrites 4 connecting two or more neurons 2 between them in order to transport one or more data contained in a neuron 2 to another neuron; each axon 4 having at its
end a synapse 3 for connecting it to a neuron.

Further the method comprises a phase of connecting at least one intermediate neuron 2 through an intermediate axon 4 and its synapse 3 directly to another axon 4 which connects two main neurons 2.

The method comprises the following steps:
selecting, through the intermediate neuron 2 and intermediate axon 4 or dendrite, one or more specific data contained in the main neurons 2 and transmitted between them along their axon 4 in function of a preselected data of the intermediate neuron 2 in such a way to define a first combination of data;
selecting, through the intermediate neuron 2 and intermediate axon 4 or dendrite, one or more specific data, different from the first selection, contained in the main neurons 2 and transmitted between them along the axon 4 in function of a preselected data of the intermediate neuron 2 in such a way to define a second combination of data different from the first. Preferably, the communication between neuron 2 / axon 4 / dendrite is bidirectional:
creating a graph 1ical representation comprising a graph 1 of said data in which a first abstraction level is defined by said first selection and a second abstraction level is defined by said second selection different from the first.

Preferably, each data contained in a neuron 2 belong to a semantic field; the intermediate neuron 2 and intermediate axon 4 being configured for selecting one or more specific data contained in the main neurons 2 which belongs to the same semantic field of the preselected data of the intermediate neuron.

Further, more than one intermediate axon 4 and intermediate neurons 2 are connected directly to the same axon.

In detail, each intermediate axons and intermediate neurons 2 are configured to select respective different data contained in the main neurons 2 and transmitted between them along the axon.

According to an aspect of the present invention, each neuron 2 is configurable in a collapsed condition in which it comprises a sub-system of a dynamic data structure comprising said neural network.

The present invention reaches the scope initially placed.

In particular, the present invention allows to represent knowledge in many different fields by using graph 1s to create models able to compute semantics and generating abstractions in an interactive and automatic mode.

The graph 1s are generated by using a computer-implemented system based on a neural network representation capable of creating different levels of abstractions in a dynamic structure in such a way to manage more efficiently information or knowledge in general.

## Claims

1. A computer-implemented neural network graph (1) system, comprising:
a plurality of neurons (2), each represented by a unique addressable node in a dynamic data structure and each containing a plurality of data;
a plurality of axons and dendrites (4) connecting two or more neurons (2) between them in order to represent a relation and transport one or more data contained in a neuron (2) to another neuron; each axon (4) dendrites (4) having at its end one or more synapse (3) for connecting it to a neuron (2) or other axon (4) and dendrites (4);
**wherein** at least one intermediate neuron (2) is connected through an intermediate axon (4) or dendrite and its synapse (3) directly to another axon (4) which connects two main neurons (2); the intermediate neuron (2) and intermediate axon (4) being configured for:
- selecting one or more specific data contained in the main neurons (2) and transmitted between them along their axon, in a bidirectional way, in function of a preselected data of the intermediate neuron (2) in such a way to define a first combination of data;
- selecting one or more specific data, different from the first selection, contained in the main neurons (2) and transmitted between them along the axon, in a bidirectional way, in function of a preselected data of the intermediate neuron (2) in such a way to define a second combination of data different from the first;
- creating a graphical representation comprising a graph (1) of said data in which a first abstraction level is defined by said first selection and a second abstraction level is defined by said second selection different from the first.

2. A computer-implemented neural network graph (1) according to claim 1, wherein each data contained in a neuron (2) belong to a semantic field; the intermediate neuron (2) and intermediate axon (4) being configured for selecting one or more specific data contained in the main neurons (2) which belongs to the same semantic field of the preselected data of the intermediate neuron.

3. A computer-implemented neural network graph (1) according to any of the preceding claims, wherein more than one intermediate axon (4) and intermediate neurons (2) are connected directly to the same axon.

4. A computer-implemented neural network graph (1) according to claim 3, wherein each intermediate axons and intermediate neurons (2) are configured to select respective different data contained in the main neurons (2) and transmitted between them along the axon.

5. A computer-implemented neural network graph (1) according to any of the preceding claims, wherein each neuron (2) is configurable in a collapsed condition in which it comprises a sub-system of a dynamic data structure comprising a neural network according to claim (1).

6. A computer-implemented neural network graph (1) according to any of the preceding claims, wherein each combination of data is represented in a graphical way in a three-dimensional model.

7. A dynamic data structure selected from a:
- File system; or
- E-mail system; or
- Browser system; or
- Data Base sub-set replication system; or
- Metastable models, preferably a Diabetes system; or
- loT exact Big Data; or
- Hypertext; or
- Benchmark and evaluation system; or
- Simulations and semantic models; or
comprising a computer-implemented neural network according to any of the preceding claims wherein the specific data are defined by one or more of said data structure.

8. Method for implementing a neural network graph (1) through a computer, comprising the following steps:
realizing a plurality of neurons (2), each represented by a unique addressable node in a dynamic data structure and each containing a plurality of data;
realizing a plurality of axons connecting two or more neurons (2) between them in order to transport one or more data contained in a neuron (2) to another neuron; each axon (4) having at its end a synapse (3) for connecting it to a neuron;
**wherein** connecting at least one intermediate neuron (2) through an intermediate axon (4) and its synapse (3) directly to another axon (4) which connects two main neurons (2);
selecting, through the intermediate neuron (2) and intermediate axon, one or more specific data contained in the main neurons (2) and transmitted between them along their axon, in a bidirectional way, in function of a preselected data of the intermediate neuron (2) in such a way to define a first combination of data;
selecting, through the intermediate neuron (2) and intermediate axon, one or more specific data, different from the first selection, contained in the main neurons (2) and transmitted between them along the axon, in a bidirectional way, in function of a preselected data of the intermediate neuron (2) in such a way to define a second combination of data different from the first;
creating a graphical representation comprising a graph (1) of said data in which a first abstraction level is defined by said first selection and a second abstraction level is defined by said second selection different from the first.

9. Method according to claim 8, wherein each data contained in a neuron (2) belong to a semantic field; the intermediate neuron (2) and intermediate axon (4) being configured for selecting one or more specific data contained in the main neurons (2) which belongs to the same semantic field of the preselected data of the intermediate neuron.

10. Method according to any of the claims from 8 to 9, wherein more than one intermediate axon (4) and intermediate neurons (2) are connected directly to the same axon.

11. Method according to claim 10 wherein each intermediate axons and intermediate neurons (2) are configured to select respective different data contained in the main neurons (2) and transmitted between them along the axon.

12. Method according to any of the claims from 8 to 11 wherein each neuron (2) is configurable in a collapsed condition in which it comprises a sub-system of a dynamic data structure comprising a neural network according to claim (1).

13. Method according to any of the claims from 8 to 12 wherein the specific data are defined by one or more of the data structures:
- File system; or
- E-mail system; or
- Browser system; or
- Data Base sub-set replication system; or
- Metastable models, preferably a Diabetes system; or
- loT exact Big Data; or
- Hypertext; or
- Benchmark and evaluation system; or
- Simulations and semantic models; or
- Interactive models and logic engines.

## Amended claims

### Amended claims in accordance with Rule 137(2) EPC.

1. A computer-implemented neural network graph (1) system for representing data in many different fields, comprising:
a plurality of neurons (2), each represented by a unique addressable node in a dynamic data structure and each containing a plurality of data;
a plurality of axons and dendrites (4) connecting two or more neurons (2) between them in order to represent a relation and transport one or more data contained in a neuron (2) to another neuron; each axon (4) dendrites (4) having at its end one or more synapse (3) for connecting it to a neuron (2) or other axon (4) and dendrites (4);
**wherein** at least one intermediate neuron (2) is connected through an intermediate axon (4) or dendrite and its synapse (3) directly to another axon (4) which connects two main neurons (2); the intermediate neuron (2) and intermediate axon (4) being configured for:
- selecting one or more specific data contained in the main neurons (2) and transmitted between them along their axon, in a bidirectional way, in function of a preselected data of the intermediate neuron (2) in such a way to define a first combination of data;
- selecting one or more specific data, different from the first selection, contained in the main neurons (2) and transmitted between them along the axon, in a bidirectional way, in function of a preselected data of the intermediate neuron (2) in such a way to define a second combination of data different from the first;
- creating a graphical representation of said data comprising a graph (1) of said data in which a first abstraction level is defined by said first selection and a second abstraction level is defined by said second selection different from the first;
- managing said data by using said graphical representation.

2. A computer-implemented neural network graph (1) according to claim 1, wherein each data contained in a neuron (2) belong to a semantic field; the intermediate neuron (2) and intermediate axon (4) being configured for selecting one or more specific data contained in the main neurons (2) which belongs to the same semantic field of the preselected data of the intermediate neuron.

3. A computer-implemented neural network graph (1) according to any of the preceding claims, wherein more than one intermediate axon (4) and intermediate neurons (2) are connected directly to the same axon.

4. A computer-implemented neural network graph (1) according to claim 3, wherein each intermediate axons and intermediate neurons (2) are configured to select respective different data contained in the main neurons (2) and transmitted between them along the axon.

5. A computer-implemented neural network graph (1) according to any of the preceding claims, wherein each neuron (2) is configurable in a collapsed condition in which it comprises a sub-system of a dynamic data structure comprising a neural network according to claim (1).

6. A computer-implemented neural network graph (1) according to any of the preceding claims, wherein each combination of data is represented in a graphical way in a three-dimensional model.

7. A dynamic data structure selected from a:
- File system; or
- E-mail system; or
- Browser system; or
- Data Base sub-set replication system; or
- Metastable models, preferably a Diabetes system; or
- loT exact Big Data; or
- Hypertext; or
- Benchmark and evaluation system; or
- Simulations and semantic models; or
comprising a computer-implemented neural network according to any of the preceding claims wherein the specific data are defined by one or more of said data structure.

8. Method for implementing a neural network graph (1) through a computer for representing data in many different fields, comprising the following steps:
realizing a plurality of neurons (2), each represented by a unique addressable node in a dynamic data structure and each containing a plurality of data;
realizing a plurality of axons connecting two or more neurons (2) between them in order to transport one or more data contained in a neuron (2) to another neuron; each axon (4) having at its end a synapse (3) for connecting it to a neuron;
**wherein** connecting at least one intermediate neuron (2) through an intermediate axon (4) and its synapse (3) directly to another axon (4) which connects two main neurons (2);
selecting, through the intermediate neuron (2) and intermediate axon, one or more specific data contained in the main neurons (2) and transmitted between them along their axon, in a bidirectional way, in function of a preselected data of the intermediate neuron (2) in such a way to define a first combination of data;
selecting, through the intermediate neuron (2) and intermediate axon, one or more specific data, different from the first selection, contained in the main neurons (2) and transmitted between them along the axon, in a bidirectional way, in function of a preselected data of the intermediate neuron (2) in such a way to define a second combination of data different from the first;
creating a graphical representation of said data comprising a graph (1) of said data in which a first abstraction level is defined by said first selection and a second abstraction level is defined by said second selection different from the first;
managing said data by using said graphical representation.

9. Method according to claim 8, wherein each data contained in a neuron (2) belong to a semantic field; the intermediate neuron (2) and intermediate axon (4) being configured for selecting one or more specific data contained in the main neurons (2) which belongs to the same semantic field of the preselected data of the intermediate neuron.

10. Method according to any of the claims from 8 to 9, wherein more than one intermediate axon (4) and intermediate neurons (2) are connected directly to the same axon.

11. Method according to claim 10 wherein each intermediate axons and intermediate neurons (2) are configured to select respective different data contained in the main neurons (2) and transmitted between them along the axon.

12. Method according to any of the claims from 8 to 11 wherein each neuron (2) is configurable in a collapsed condition in which it comprises a sub-system of a dynamic data structure comprising a neural network according to claim (1).

13. Method according to any of the claims from 8 to 12 wherein the specific data are defined by one or more of the data structures:
- File system; or
- E-mail system; or
- Browser system; or
- Data Base sub-set replication system; or
- Metastable models, preferably a Diabetes system; or
- loT exact Big Data; or
- Hypertext; or
- Benchmark and evaluation system; or
- Simulations and semantic models; or
- Interactive models and logic engines.
